# EUROPÄISCHE PATENTSCHRIFT

(11) **EP 4 445 234 B1**
(45) Veröffentlichungstag und Bekanntmachung des Hinweises auf die Patenterteilung: **11.02.2026**
(21) Anmeldenummer: 22823583.4
(22) Anmeldetag: 05.12.2022
(51) Int. Cl.: G05D 1/00, G08G 1/04, G08G 1/14, B62D 15/02

(54) **KONZEPT ZUM ASSISTIEREN EINES KRAFTFAHRZEUGS**
CONCEPT FOR ASSISTING A MOTOR VEHICLE
CONCEPT D'ASSISTANCE D'UN VÉHICULE AUTOMOBILE

(30) Priorität: 09.12.2021 DE 102021214055
(43) Veröffentlichungstag der Anmeldung: 16.10.2024
(73) Patentinhaber: Robert Bosch GmbH, 70442 Stuttgart (DE)
(72) Erfinder: LEHN, Andreas, 73760 Ostfildern (DE); HESS, Felix, 71726 Benningen (DE)
(86) Internationale Anmeldenummer: PCT/EP2022/084334
(87) Internationale Veröffentlichungsnummer: WO 2023/104682

(56) Entgegenhaltungen:
- DE-A1- 102014 211 557
- DE-A1- 102015 214 826

## Beschreibung

Die Erfindung betrifft ein System zum infrastrukturgestützten Assistieren eines innerhalb eines Parkplatzes zumindest teilautomatisiert geführten Kraftfahrzeugs, ein Verfahren zum infrastrukturgestützten Assistieren eines innerhalb eines Parkplatzes zumindest teilautomatisiert geführten Kraftfahrzeugs, ein Computerprogramm und ein maschinenlesbares Speichermedium.

### Stand der Technik

AVP steht für "Automated Valet Parking" und kann ins Deutsche mit "Automatischer Parkservice" übersetzt werden.

Parkplätze, welche eine AVP-Funktionalität für ein Kraftfahrzeug bereitstellen können, umfassen mehrere Umfeldsensoren, welche jeweils ein Bereich des Parkplatzes erfassen. Die der Erfassung entsprechende Umfeldsensordaten werden von den Umfeldsensoren an einen zentralen Server gesendet, welche die Umfeldsensordaten auswertet und basierend auf der Auswertung Infrastrukturassistenzdaten ermittelt, basierend auf welchen das Kraftfahrzeug zumindest teilautomatisiert innerhalb des Parkplatzes geführt werden kann. Die Infrastrukturassistenzdaten werden an das Kraftfahrzeug drahtlos, zum Beispiel über WLAN, gesendet.

Die Offenlegungsschrift DE 10 2016 223 830 A1 offenbart ein Verfahren zum Betreiben eines automatisierten Fahrzeugs.

Die Offenlegungsschrift WO 2018/029101 A1 offenbart eine Steuerung eines autonomen Fahrzeugs.

Die Offenlegungsschrift US 2019/0132709 A1 offenbart ein Sensornetzwerk.

Die Offenlegungsschrift DE 10 2014 211 557 A1 offenbart ein Valet Parking Verfahren und System.

Die Offenlegungsschrift DE 10 2015 214 826 A1 offenbart ein Verfahren zum Lokalisieren eines sich innerhalb eines Parkplatzes befindenden Fahrzeugs.

### Offenbarung der Erfindung

Die der Erfindung zugrunde liegende Aufgabe ist darin zu sehen, ein Konzept zum effizienten infrastrukturgestützten Assistieren eines innerhalb eines Parkplatzes zumindest teilautomatisiert geführten Kraftfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein System zum infrastrukturgestützten Assistieren eines innerhalb eines Parkplatzes zumindest teilautomatisiert geführten Kraftfahrzeugs bereitgestellt, umfassend:
eine erste Basiseinheit und eine zweite Basiseinheit, welche beabstandet zueinander innerhalb des Parkplatzes angeordnet und in Reihe miteinander verbunden sind,
wobei die erste Basiseinheit und die zweite Basiseinheit jeweils mit zumindest einem innerhalb des Parkplatzes, im jeweiligen Umfeld der entsprechenden Basiseinheit angeordneten, einen Bereich des Parkplatzes erfassenden Umfeldsensor verbunden sind,
wobei die erste und die zweite Basiseinheit jeweils eingerichtet sind, Infrastrukturassistenzdaten zum infrastrukturgestützten Assistieren des innerhalb des Parkplatzes zumindest teilautomatisiert geführten Kraftfahrzeugs basierend auf den jeweiligen erfassten Bereich repräsentierende Umfeldsensordaten des jeweiligen zumindest einen Umfeldsensors zu ermitteln,
zumindest eine drahtlose Kommunikationsschnittstelle, welche eingerichtet ist, die ermittelten Infrastrukturassistenzdaten an das Kraftfahrzeug zu senden.

Nach einem zweiten Aspekt wird ein Verfahren zum infrastrukturgestützten Assistieren eines innerhalb eines Parkplatzes zumindest teilautomatisiert geführten Kraftfahrzeugs unter Verwendung des Systems nach dem ersten Aspekt bereitgestellt, umfassend die folgenden Schritte:
Ermitteln mittels zumindest einer der ersten und der zweiten Basiseinheit von Infrastrukturassistenzdaten zum infrastrukturgestützten Assistieren des innerhalb des Parkplatzes zumindest teilautomatisiert geführten Kraftfahrzeugs basierend auf den entsprechenden Umfeldsensordaten,
Senden der ermittelten Infrastrukturassistenzdaten mittels der zumindest einen drahtlosen Kommunikationsschnittstelle an das Kraftfahrzeug.

Nach einem dritten Aspekt wird ein Computerprogramm bereitgestellt, welches Befehle umfasst, die bei Ausführung des Computerprogramms durch einen Computer, beispielsweise durch das System nach dem ersten Aspekt, diesen veranlassen, ein Verfahren gemäß dem zweiten Aspekt auszuführen.

Nach einem vierten Aspekt wird ein maschinenlesbares Speichermedium bereitgestellt, auf dem das Computerprogramm nach dem dritten Aspekt gespeichert ist.

Die Erfindung basiert auf der Erkenntnis und schließt diese mit ein, dass die obige Aufgabe dadurch gelöst wird, dass das System als eine Edge-Computing-Architektur implementiert ist. Edge-Computing bezeichnet im Gegensatz zum Cloud Computing die dezentrale Datenverarbeitung am Rand eines Netzwerks, der sogenannten Edge (engl. für Rand oder Kante). Das heißt, dass gemäß dem hier beschriebenen Konzept vorgesehen ist, dass das Ermitteln der Infrastrukturassistenzdaten nicht mehr einem zentralen Server überlassen wird, sondern von mehreren Basiseinheiten durchgeführt wird, welche innerhalb des Parkplatzes angeordnet sind. Somit verkürzt sich in vorteilhafter Weise eine Übertragungsstrecke zwischen Umfeldsensor und der Instanz, welche basierend auf den Umfeldsensordaten die Infrastrukturassistenzdaten ermittelt, vorliegend die Basiseinheit, im Vergleich zum zentralen Server, welcher in der Regel in einem Serverraum angeordnet ist, welcher üblicherweise außerhalb des Parkplatzes liegt.

Weiter ist gemäß dem hier beschriebenen Konzept vorgesehen, dass die Basiseinheit nicht die Umfeldsensordaten aller Umfeldsensoren, welche innerhalb des Parkplatzes angeordnet sind, verwendet, um die Infrastrukturassistenzdaten zu ermitteln, sondern nur eine Unteranzahl, beispielsweise 4 bis 16, von Umfeldsensoren. Somit sind die Basiseinheiten nur mit den Umfeldsensoren verbunden, welche sich im jeweiligen Umfeld der Basiseinheiten befinden. Auch dadurch kann in vorteilhafter Weise eine Übertragungsstrecke effizient reduziert werden im Vergleich zum Ansatz umfassend den zentralen Server, welcher von sämtlichen Umfeldsensoren des Parkplatzes die entsprechenden Umfeldsensordaten erhält.

Weiter wird dadurch der technische Vorteil bewirkt, dass ein Aufwand für eine Verlegung von Datenkabeln zwecks Übertragung der Umfeldsensordaten effizient reduziert werden kann.

Weiter wird dadurch der technische Vorteil bewirkt, dass eine benötigte Minimalbandbreite zur Datenübertragung der Umfeldsensordaten effizient reduziert werden kann, da verglichen zum Ansatz mit dem zentralen Server weniger Umfeldsensordaten an eine einzelne Basiseinheit gesendet werden müssen.

Weiter wird dadurch der technische Vorteil bewirkt, dass die Basiseinheiten im Vergleich zu einem zentralen Server hardwaremäßig schwächer ausgestattet sein können, da sie verglichen zum zentralen Server nicht die gleiche Menge an Umfeldsensordaten verarbeiten müssen.

Weiter wird dadurch der technische Vorteil bewirkt, dass auf einen zentralen Server verzichtet werden kann. Weiter wird dadurch der technische Vorteil bewirkt, dass auf einen separaten Serverraum verzichtet werden kann. Somit können Kosten und Bauraum für einen solchen Serverraum eingespart werden.

Das hier beschriebene Konzept sieht vor, dass unmittelbar benachbarte Basiseinheiten miteinander verbunden sind. Im Englischen wird für eine solche Topologie der Begriff "Daisy Chain" verwendet, auf Deutsch "Gänseblümchenkette". Das heißt also, dass die Basiseinheiten in einer Reihe verbunden sind. Das weist insbesondere den technischen Vorteil auf, dass die Basiseinheiten jeweils von unmittelbar benachbarten Basiseinheiten die Umfeldsensordaten des zumindest einen Umfeldsensors empfangen können, welcher mit der anderen Basiseinheit verbunden ist. Dies ist im Gegensatz zu einer Baumtopologie zu sehen, welche üblicherweise beim Ansatz mit dem zentralen Server zum Einsatz kommt. Im Vergleich zu einer Baumtopologie reduziert sich bei einer Daisy Chain ein Aufwand für eine Verlegung von Datenkabeln zwecks Übertragung der Umfeldsensordaten.

Weiter weist das Konzept den technischen Vorteil auf, dass eine Komplexität der verwendeten Hardwareprodukte verglichen zum zentralen-Server-Ansatz reduziert werden kann, da es zwei Typen an Hardware benötigt: Basiseinheit und Umfeldsensor.

Zusammenfassend wird dadurch ein Konzept zum effizienten infrastrukturgestützten Assistieren eines innerhalb eines Parkplatzes zumindest teilautomatisiert geführten Kraftfahrzeugs bereitgestellt.

Ein infrastrukturgestütztes Assistieren des Kraftfahrzeugs bedeutet insbesondere, dass dem Kraftfahrzeug Infrastrukturassistenzdaten zur Verfügung gestellt werden. Das Kraftfahrzeug kann basierend auf den Infrastrukturassistenzdaten zum Beispiel Handlungsanweisungen ableiten. Das Kraftfahrzeug kann zum Beispiel basierend auf den Infrastrukturassistenzdaten selbst entscheiden, was zu tun ist.

Infrastrukturassistenzdaten umfassen zum Beispiel ein oder mehrere der folgenden Elemente an Daten: Steuerbefehl zum zumindest teilautomatisierten Steuern einer Quer- und/oder Längsführung des Kraftfahrzeugs, Fernsteuerbefehl zum zumindest teilautomatisierten Fernsteuern einer Quer- und/oder Längsführung des Kraftfahrzeugs, Freigabebefehl zur Freigabe einer zumindest teilautomatisierten, insbesondere vollautomatisierten, Fahrt des Kraftfahrzeugs für eine bestimmte Zeit in einem bestimmten Bereich des Parkplatzes, Solltrajektorie für das Kraftfahrzeug, Zielposition innerhalb des Parkplatzes, Umgebungsdaten, welche eine Umgebung des Kraftfahrzeugs repräsentieren, Vorgabe, was das Kraftfahrzeug tun soll, Die Vorgabe gibt zum Beispiel vor, ob das Kraftfahrzeug zum Beispiel fahren darf oder zum Beispiel anhalten muss.

Die in dieser Beschreibung verwendete Formulierung "in einer Ausführungsform des Systems" umfasst die Formulierung "in einer Ausführungsform des Systems, wobei die Ausführungsform zum Beispiel die jeweiligen Merkmale von zumindest einer der in der Beschreibung beschriebenen Ausführungsformen umfasst". Das heißt also, dass die jeweiligen Merkmale der in der Beschreibung beschriebenen Ausführungsformen zum Beispiel in beliebiger Kombination stehen können.

In einer Ausführungsform des Systems ist vorgesehen, dass die erste und die zweite Basiseinheit jeweils eingerichtet sind, die Infrastrukturassistenzdaten basierend auf den Umfeldsensordaten des zumindest einen Umfeldsensors der jeweils anderen Basiseinheit zu ermitteln.

Dadurch wird zum Beispiel der technische Vorteil bewirkt, dass die Infrastrukturassistenzdaten effizient ermittelt werden können. Die Umfeldsensordaten des zumindest einen Umfeldsensors der jeweils anderen Basiseinheit werden zum Beispiel mittels der ersten oder der zweiten Basiseinheit von der jeweils anderen Basiseinheit angefordert.

Zur Ermittlung eine Fahrfreigabe für das Kraftfahrzeug ist es vorteilhaft, wenn das gesamte Umfeld des Kraftfahrzeugs bekannt ist. Wenn also die an die Basiseinheit angeschlossenen Umfeldsensoren nicht das gesamte Umfeld erfassen, dann ist gemäß einer Ausführungsform vorgesehen, dass von der/den benachbarten Basiseinheit(en) die Umfeldsensordaten der dortigen Umfeldsensoren verwendet werden.

Der große Vorteil ist: Die Anordnung der Umfeldsensoren und/oder Basiseinheiten ist so, dass maximal die Umfeldsensordaten der unmittelbar benachbarten Basiseinheit(en) benötigt werden. Informationen von weiter entfernten Basiseinheiten werden in der Regel nicht benötigt.

In einer Ausführungsform ist vorgesehen, dass die erste und die zweite Basiseinheit jeweils eine erste Kommunikationseinrichtung, insbesondere einen ersten Netzwerkswitch, und eine zweite Kommunikationseinrichtung, insbesondere einen zweiten Netzwerkswitch, umfassen, wobei die Verbindung zwischen der ersten und der zweiten Basiseinheit unter Verwendung der beiden ersten Kommunikationseinrichtungen gebildet ist, und wobei die jeweilige Verbindung zwischen dem zumindest einen Umfeldsensor und der entsprechenden Basiseinheit unter Verwendung der entsprechenden zweiten Kommunikationseinrichtung gebildet ist.

Das bedeutet, dass die erste Kommunikationseinrichtung zum Beispiel ein erster Netzwerkswitch ist oder einen solchen umfasst. Das bedeutet, dass die erste Kommunikationseinrichtung zum Beispiel ein zweiter Netzwerkswitch ist oder einen solchen umfasst.

Insofern kann gemäß einer Ausführungsform des Systems vorgesehen sein, dass die erste und die zweite Basiseinheit jeweils einen ersten Netzwerkswitch und einen zweiten Netzwerkswitch umfassen, wobei die Verbindung zwischen der ersten und der zweiten Basiseinheit unter Verwendung der beiden ersten Netzwerkswitche gebildet ist, und wobei die jeweilige Verbindung zwischen dem zumindest einen Umfeldsensor und der entsprechenden Basiseinheit unter Verwendung des entsprechenden zweiten Netzwerkswitch gebildet ist.

Dadurch wird zum Beispiel der technische Vorteil bewirkt, dass die erste und die zweite Basiseinheit und/oder der jeweilige zumindest eine Umfeldsensor und die entsprechende Basiseinheit effizient miteinander verbunden werden können.

In einer Ausführungsform des Systems ist vorgesehen, dass die erste und die zweite Basiseinheit entlang eines Fahrweges des Parkplatzes angeordnet sind.

Dadurch wird zum Beispiel der technische Vorteil bewirkt, dass eine Kommunikationsstrecke zwischen den Basiseinheiten und dem zu assistierenden Kraftfahrzeug möglichst kurz gehalten werden kann.

In einer Ausführungsform des Systems ist vorgesehen, dass die erste und die zweite Basiseinheit eingerichtet sind, basierend auf den Umfeldsensordaten das Kraftfahrzeug zu verfolgen und basierend auf der Verfolgung das jeweilige Senden von Infrastrukturdaten mittels der entsprechenden drahtlosen Kommunikationsschnittstelle zu steuern.

Dadurch wird zum Beispiel der technische Vorteil bewirkt, dass das Senden von Infrastrukturdaten effizient gesteuert werden kann. Das Steuern des Sendens umfasst zum Beispiel ein Beenden des Sendens und zum Beispiel ein Übergeben des Sendens an eine unmittelbar benachbarte Basiseinheit, welche sich in Fahrtrichtung des Kraftfahrzeugs befindet. Das Verfolgen des Kraftfahrzeugs umfasst zum Beispiel ein Ermitteln einer Position des Kraftfahrzeugs. Das Verfolgen des Kraftfahrzeugs umfasst zum Beispiel ein Ermitteln einer Distanz des Kraftfahrzeugs relativ zu einer vorbestimmten Fixposition. Die vorbestimmte Fixposition ist zum Beispiel die Position der ersten oder zweiten Basiseinheit.

Es ist zum Beispiel so, dass jede Basiseinheit ihre Nachbar-Basiseinheiten kennt. Sie weiß also, dass, wenn das Kraftfahrzeug zum Beispiel in Richtung Norden fährt, dann muss sie an die nördlich gelegene Basiseinheit übergeben, wenn das Kraftfahrzeug zum Beispiel Richtung Süden fährt, dann an die südliche Basiseinheit. Diese Informationen, wo und welche Nachbar-Basiseinheiten angeordnet sind, sind zum Beispiel jeweils in einem Speicher der Basiseinheiten gespeichert.

In einer Ausführungsform des Systems umfasst dieses eine dritte Basiseinheit, welche innerhalb des Parkplatzes angeordnet und in Reihe mit der ersten oder der zweiten Basiseinheit verbunden ist, wobei die dritte Basiseinheit mit zumindest einem innerhalb des Parkplatzes, im Umfeld der dritten Basiseinheit angeordneten, einen Bereich des Parkplatzes erfassenden Umfeldsensor verbunden ist, wobei die dritte Basiseinheit eingerichtet ist, Infrastrukturassistenzdaten zum infrastrukturgestützten Assistieren des innerhalb des Parkplatzes zumindest teilautomatisiert geführten Kraftfahrzeugs basierend auf den jeweiligen erfassten Bereich repräsentierende Umfeldsensordaten des zumindest einen Umfeldsensors zu ermitteln,
wobei die dritte Basiseinheit eine drahtlose Kommunikationsschnittstelle aufweist, welche eingerichtet ist, die Infrastrukturassistenzdaten an das Kraftfahrzeug zu senden.

Dadurch wird zum Beispiel der technische Vorteil bewirkt, dass dem Kraftfahrzeug effizient assistiert werden kann. Ausführungen, die im Zusammenhang mit der ersten und/oder der zweiten Basiseinheit gemacht sind, gelten analog für die dritte Basiseinheit und umgekehrt.

Eine Umfeldsensor im Sinne der Beschreibung ist z. B. einer der folgenden Umfeldsensoren: Radarsensor, Lidarsensor, Ultraschallsensor, Videosensor / Kamera (sowohl Mono- als auch Stereokamera), Magnetfeldsensor und Infrarotsensor.

In einer Ausführungsform des Verfahrens nach dem zweiten Aspekt ist vorgesehen, dass das Verfahren ein computerimplementiertes Verfahren ist.

Technische Funktionalitäten des Verfahrens nach dem zweiten Aspekt ergeben sich aus entsprechenden technischen Funktionalitäten des Systems nach dem ersten Aspekt und umgekehrt.

Das heißt also, dass sich Verfahrensmerkmale aus Systemmerkmalen und umgekehrt ergeben.

Die Formulierung "zumindest teilautomatisiertes Führen" umfasst einen oder mehrere der folgenden Fälle: assistiertes Führen, teilautomatisiertes Führen, hochautomatisiertes Führen, vollautomatisiertes Führen.

Assistiertes Führen bedeutet, dass ein Fahrer des Kraftfahrzeugs dauerhaft entweder die Quer- oder die Längsführung des Kraftfahrzeugs ausführt. Die jeweils andere Fahraufgabe (also ein Steuern der Längs- oder der Querführung des Kraftfahrzeugs) wird automatisch durchgeführt. Das heißt also, dass bei einem assistierten Führen des Kraftfahrzeugs entweder die Quer- oder die Längsführung automatisch gesteuert wird.

Teilautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) und/oder für einen gewissen Zeitraum eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss aber das automatische Steuern der Längs- und Querführung dauerhaft überwachen, um bei Bedarf manuell eingreifen zu können. Der Fahrer muss jederzeit zur vollständigen Übernahme der Kraftfahrzeugführung bereit sein.

Hochautomatisiertes Führen bedeutet, dass für einen gewissen Zeitraum in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben, insbesondere mit einer ausreichenden Zeitreserve ausgegeben. Der Fahrer muss also potenziell in der Lage sein, das Steuern der Längs- und Querführung zu übernehmen. Grenzen des automatischen Steuerns der Quer- und Längsführung werden automatisch erkannt. Bei einem hochautomatisierten Führen ist es nicht möglich, in jeder Ausgangssituation automatisch einen risikominimalen Zustand herbeizuführen.

Vollautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. Vor einem Beenden des automatischen Steuerns der Quer- und Längsführung erfolgt automatisch eine Aufforderung an den Fahrer zur Übernahme der Fahraufgabe (Steuern der Quer- und Längsführung des Kraftfahrzeugs), insbesondere mit einer ausreichenden Zeitreserve. Sofern der Fahrer nicht die Fahraufgabe übernimmt, wird automatisch in einen risikominimalen Zustand zurückgeführt. Grenzen des automatischen Steuerns der Quer- und Längsführung werden automatisch erkannt. In allen Situationen ist es möglich, automatisch in einen risikominimalen Systemzustand zurückzuführen. Im Falle von AVP kann es sich um ein vollautomatisiertes Führen handeln, wobei der Fahrer nicht einmal mehr im Kraftfahrzeug sein muss. Das Kraftfahrzeug kann tatsächlich fahrerlos fahren.

Die Begriffe "assistieren" und "unterstützen" können synonym verwendet werden.

Die Abkürzung "zumindest ein(e)" bedeutet "ein(e) oder mehrere".

Das Kraftfahrzeug ist zum Beispiel eingerichtet, zumindest teilautomatisiert geführt zu werden. Das Kraftfahrzeug ist zum Beispiel ein AVP-Kraftfahrzeug. Ein solches Kraftfahrzeug ist insbesondere eingerichtet, einen AVP-Vorgang durchzuführen. AVP steht für "Automated Valet Parking" und kann ins Deutsche mit "Automatischer Parkservice" übersetzt werden.

In einer Ausführungsform des Systems ist vorgesehen, dass die zumindest eine drahtlose Kommunikationsschnittstelle von jeweils zumindest einer Basiseinheit umfasst ist.

Dadurch wird zum Beispiel der technische Vorteil bewirkt, dass die drahtlose Kommunikationsschnittstelle effizient implementiert werden kann.

An dieser Stelle wird angemerkt, dass nicht jede Basiseinheit eine drahtlose Kommunikationsschnittstelle aufweisen muss. Eine Basiseinheit ohne drahtlose Kommunikationsschnittstelle kann zum Beispiel mittels der drahtlosen Kommunikationsschnittstelle der benachbarten Basiseinheit kommunizieren, also mittels der drahtlosen Kommunikationsschnittstelle der benachbarten Basiseinheit die Infrastrukturassistenzdaten an das Kraftfahrzeug senden.

Gemäß einer Ausführungsform des Systems ist vorgesehen, dass jede Basiseinheit eine eigene drahtlose Kommunikationsschnittstelle aufweist.

Gemäß einer Ausführungsform des Systems ist vorgesehen, dass nur einige der Basiseinheiten jeweils eine eigene drahtlose Kommunikationsschnittstelle aufweisen.

Wenn in der Beschreibung ein beispielhaftes System beschrieben ist, in welchem jede der Basiseinheiten jeweils eine eigene drahtlose Kommunikationsschnittstelle aufweist, so gelten die entsprechenden Ausführungen auch für ein System, in welchem nur einige der Basiseinheiten jeweils eine eigene drahtlose Kommunikationsschnittstelle aufweisen.

Eine drahtlose Kommunikationsschnittstelle im Sinne der Beschreibung ist zum Beispiel getrennt von den Basiseinheiten innerhalb des Parkplatzes angeordnet. Zum Beispiel umfassen eine oder mehrere Basiseinheiten jeweils eine eigene drahtlose Kommunikationsschnittstelle. Zum Beispiel umfassen eine oder mehrere Basiseinheiten jeweils keine eigene drahtlose Kommunikationsschnittstelle, d.h. dass diese Basiseinheiten frei von einer eigenen drahtlosen Kommunikationsschnittstelle sind. Zum Beispiel sind eine oder mehrere drahtlose Kommunikationsschnittstellen getrennt von den Basiseinheiten innerhalb des Parkplatzes angeordnet, zum Beispiel an einer Decke und/oder an einer Säule und/oder an einer Wand montiert. Eine Basiseinheit ohne eine eigene drahtlose Kommunikationsschnittstelle kann zum Beispiel eine solche drahtlose Kommunikationsschnittstelle verwenden, um mit dem Kraftfahrzeug zu kommunizieren, also um die Infrastrukturassistenzdaten an das Kraftfahrzeug zu senden.

Eine drahtlose Kommunikationsschnittstelle im Sinne der Beschreibung ist zum Beispiel innerhalb des Parkplatzes angeordnet.

Ausführungsbeispiele der Erfindung sind in den Zeichnungen dargestellt und in der nachfolgenden Beschreibung näher erläutert. Es zeigen:
- Fig. 1: ein erstes System nach dem ersten Aspekt,
- Fig. 2: ein zweites System nach dem ersten Aspekt,
- Fig. 3: ein Ablaufdiagramm eines Verfahrens nach dem zweiten Aspekt und
- Fig. 4: ein maschinenlesbares Speichermedium nach dem vierten Aspekt.

Im Folgenden können für gleiche Merkmale gleiche Bezugszeichen verwendet werden.

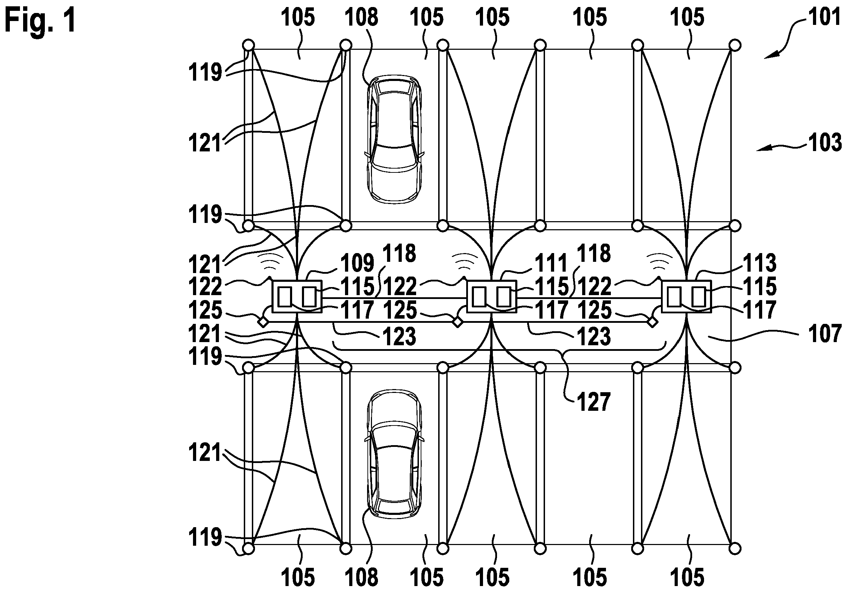

Fig. 1 zeigt ein erstes System 101 zum infrastrukturgestützten Assistieren eines innerhalb eines Parkplatzes zumindest teilautomatisiert geführten Kraftfahrzeugs in einer schematischen Draufsicht. Das erste System 101 ist innerhalb eines ersten Parkplatzes 103 installiert. Der Parkplatz 103 umfasst mehrere Stellplätze 105 für Kraftfahrzeuge und eine Fahrbahn 107 für Kraftfahrzeuge, welche einen Fahrweg für Kraftfahrzeug festlegt. Die Stellplätze 105 sind quer zum Fahrweg 107 angeordnet: 5 Stellplätze 105 oberhalb des Fahrwegs 107 und 5 Stellplätze 105 unterhalb der Fahrbahn 107 bezogen auf die Papierebene. Beispielhaft sind zwei Kraftfahrzeuge 108 gezeigt, wobei das eine Kraftfahrzeug 108 auf dem zweiten, oberen Stellplatz 105 von links abgestellt ist und wobei das andere Kraftfahrzeug 108 auf dem zweiten, unteren Stellplatz 105 von links abgestellt ist.

Das System 101 umfasst eine erste Basiseinheit 109, eine zweite Basiseinheit 111 und eine dritte Basiseinheit 113, welche entlang des Fahrwegs 107 angeordnet sind, beispielsweise an einer Decke (nicht gezeigt) des Parkplatzes 103. Die drei Basiseinheiten 109, 111, 113 umfassen jeweils einen ersten Netzwerkswitch 115 und einen zweiten Netzwerkswitch 117.

Unter Verwendung der entsprechenden ersten Netzwerkswitche 115 ist die erste Basiseinheit 109 mit der zweiten Basiseinheit 111 und ist die zweite Basiseinheit 111 mit der dritten Basiseinheit 113 jeweils in Reihe verbunden. Eine jeweilige Verbindung zwischen den Basiseinheiten 109, 111, 113 ist mittels eine Linie mit dem Bezugszeichen 118 dargestellt. Die jeweilige Verbindung 118 ist zum Beispiel eine Ethernetverbindung.

Unter Verwendung der entsprechenden zweiten Netzwerkswitche 117 sind die drei Basiseinheiten 109, 111, 113 jeweils mit Umfeldsensoren 119 verbunden, welche im jeweiligen Umfeld der drei Basiseinheiten 109, 111, 113 innerhalb des Parkplatzes 103 angeordnet sind. Die Umfeldsensoren 119 sind vom ersten System 101 umfasst. Eine jeweilige Verbindung zwischen den Basiseinheiten 109, 111, 113 und den Umfeldsensoren 119 sind mit Linien mit dem Bezugszeichen 121 gekennzeichnet, wobei der Übersicht halber nur für die erste Basiseinheit 109 die entsprechenden Linien mit dem Bezugszeichen 121 versehen sind.

Es ist vorgesehen, dass die einzelnen Basiseinheiten 109, 111, 113 nicht mit allen Umfeldsensoren 119, welche sich innerhalb des Parkplatzes befinden, verbunden sind, sondern nur mit denjenigen in ihrem unmittelbaren Umfeld. So ist beispielhaft vorgesehen, dass an jeder Ecke der Stellplätze 105 ein Umfeldsensor 119 angeordnet ist. Die drei Basiseinheiten 109, 111, 113 sind jeweils mit 4 jeweiligen Umfeldsensoren eines oberen und eines unteren Stellplatzes 105 verbunden, also vorliegend mit insgesamt 8 Umfeldsensoren 119.

Die Umfeldsensoren 119 erfassen jeweils einen Bereich des Parkplatzes 103 und übermitteln an die entsprechenden Basiseinheiten 109, 111, 113 der Erfassung entsprechende Umfeldsensordaten. Basierend auf den Umfeldsensordaten ermitteln die entsprechenden Basiseinheiten 109, 111, 113 Infrastrukturassistenzdaten.

Die drei Basiseinheiten 109, 111, 113 umfassen jeweils eine drahtlose Kommunikationsschnittstelle 122, mittels welcher sie die Infrastrukturassistenzdaten drahtlos an ein Kraftfahrzeug senden.

In einer nicht gezeigten Ausführungsform umfasst das erste System 101 eine oder mehrere drahtlose Kommunikationsschnittstellen, welche getrennt von den Basiseinheiten 109, 111, 113 innerhalb des Parkplatzes 103 angeordnet sind.

Weiter werden die drei Basiseinheiten 109, 111, 113 über eine elektrische Leitung 123 mit elektrischer Energie versorgt. Es ist vorgesehen, dass die drei Basiseinheiten 109, 111, 113 jeweils über einen elektrischen Anschluss 125 mit der elektrischen Leitung 123 elektrisch verbunden sind. Der elektrische Anschluss 125 ist zum Beispiel eine Steckdose oder eine Verteilerdose, von welcher jeweils ein elektrisches Kabel zur entsprechenden Basiseinheit führt.

Dadurch, dass die drei Basiseinheiten 109, 111, 113 in Reihe miteinander verbunden sind, bilden sie eine Daisy Chain, was symbolisch mit einer geschweiften Klammer mit dem Bezugszeichen 127 gekennzeichnet ist.

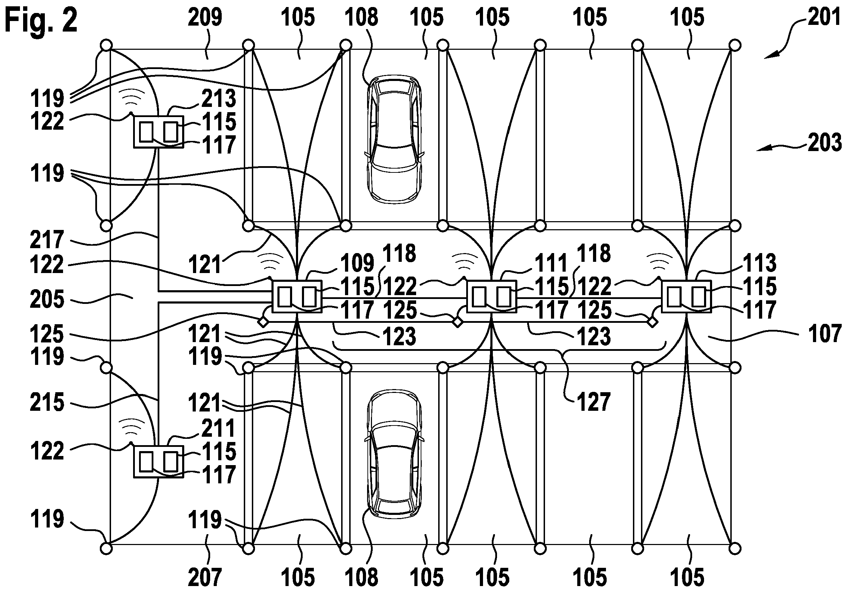

Fig. 2 zeigt ein zweites System 201 zum infrastrukturgestützten Assistieren eines innerhalb eines Parkplatzes zumindest teilautomatisiert geführten Kraftfahrzeugs in einer schematischen Draufsicht. Das zweite System 201 ist innerhalb eines zweiten Parkplatzes 203 installiert. Das zweite System 201 und der zweite Parkplatz 203 umfassen die jeweiligen Merkmale des ersten Systems 101 und des ersten Parkplatzes 103. Auf eine nochmalige Beschreibung wird daher verzichtet. Im Folgenden werden die zusätzlichen Merkmale beschrieben.

Die Fahrbahn 107 mündet in eine weitere Fahrbahn 205, welche einen weiteren Fahrweg für Kraftfahrzeuge festlegt. Die Fahrbahn 107 mündet bezogen auf die Papierebene von rechts in die weitere Fahrbahn 205, welche sich folglich bezogen auf die Papierebene links neben der Fahrbahn 107 befindet. Die weitere Fahrbahn 205 verläuft bezogen auf die Papierebene von unten nach oben und verbindet eine Einfahrt 207 mit einer Ausfahrt 209 des zweiten Parkplatzes 203.

Zwischen Einmündung und Einfahrt 207 ist eine vierte Basiseinheit 211 entlang der weiteren Fahrbahn 205 angeordnet, zum Beispiel an einer Decke des zweiten Parkplatzes 203. Zwischen Einmündung und Ausfahrt 209 ist eine fünfte Basiseinheit 213 entlang der weiteren Fahrbahn 205 angeordnet, zum Beispiel an einer Decke des zweiten Parkplatzes 203.

Die vierte und die fünfte Basiseinheit 211, 213 sind identisch zu den drei Basiseinheiten 109, 111, 113 des ersten Systems 101. Die vierte Basiseinheit 211 ist in Reihe mit der ersten Basiseinheit 109 mittels des jeweiligen ersten Netzwerkswitch 115 verbunden. Die entsprechende Verbindung ist mit einer Linie mit dem Bezugszeichen 215 gekennzeichnet. Die fünfte Basiseinheit 213 ist in Reihe mit der ersten Basiseinheit mittels des jeweiligen ersten Netzwerkswitch 115 verbunden. Die entsprechende Verbindung ist mit einer Linie mit dem Bezugszeichen 217 gekennzeichnet. Die Verbindungen 215, 217 sind zum Beispiel Ethernetverbindungen.

Somit splittet sich die Daisy Chain 127 in ein zwei Teilzweige auf: Die Verbindung 215 und die Verbindung 217.

Nicht gezeigt, aber doch vorhanden, ist eine Aufsplittung der elektrischen Leitung zwecks Versorgen der vierten und fünften Basiseinheit 211, 213 mit elektrischer Energie.

Analog zu den drei Basiseinheiten 109, 111, 113 sind auch die Basiseinheiten 211, 213 nicht mit allen Umfeldsensoren 119 verbunden, welche sich innerhalb des zweiten Parkplatzes 203 befinden. Vielmehr ist die vierte Basiseinheit 211 mit zwei Umfeldsensoren 119 mittels des entsprechenden zweiten Netzwerkswitch 117 und ist die fünfte Basiseinheit 213 mit zwei Umfeldsensoren 119 mittels des entsprechenden zweiten Netzwerkswitch 117 verbunden, wobei sich diese Umfeldsensoren 119 im unmittelbaren Umfeld der beiden Basiseinheiten 211, 213 befinden.

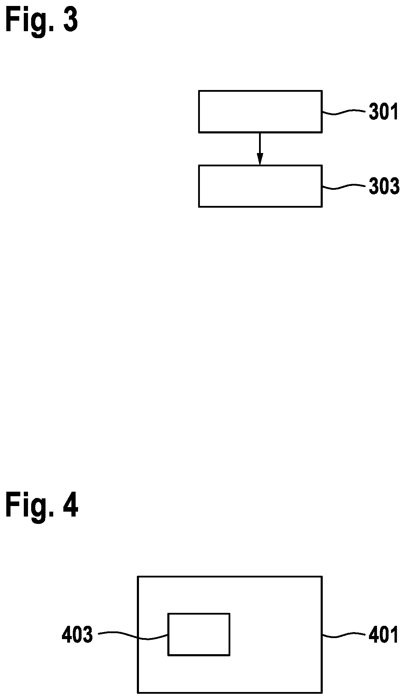

Fig. 3 zeigt ein Ablaufdiagramm eines zum infrastrukturgestützten Assistieren eines innerhalb eines Parkplatzes zumindest teilautomatisiert geführten Kraftfahrzeugs unter Verwendung des Systems nach dem ersten Aspekt, umfassend die folgenden Schritte:
Ermitteln 301 mittels zumindest einer der ersten und der zweiten Basiseinheit von Infrastrukturassistenzdaten zum infrastrukturgestützten Assistieren des innerhalb des Parkplatzes zumindest teilautomatisiert geführten Kraftfahrzeugs basierend auf den entsprechenden Umfeldsensordaten,
Senden 303 der ermittelten Infrastrukturassistenzdaten mittels der zumindest einen drahtlosen Kommunikationsschnittstelle an das Kraftfahrzeug.

In einer Ausführungsform umfasst das Verfahren einen Schritt des Erfassens des entsprechenden Bereichs des zumindest einen Umfeldsensors.

Fig. 4 zeigt ein maschinenlesbares Speichermedium 401, auf dem ein Computerprogramm 403 gespeichert ist. Das Computerprogramm 403 umfasst Befehle, die bei Ausführung des Computerprogramms 403 durch einen Computer, beispielsweise durch das System nach dem ersten Aspekt, diesen veranlassen, ein Verfahren gemäß dem zweiten Aspekt auszuführen.

Zusammenfassend basiert das Konzept auf der Verwendung einer Edge-Computing-Architektur vor, bei der eine kleine Anzahl von Umfeldsensoren (zum Beispiel 4 bis 16) mit einer Basiseinheit verbunden ist. Berechnungen, also das Ermitteln der Infrastrukturassistenzdaten, die zum zumindest teilautomatisierten Führen des AVP-Kraftfahrzeugs erforderlich sind, werden auf einer Basiseinheit ausgeführt, die sich in der Nähe der aktuellen Kraftfahrzeugposition innerhalb des Parkplatzes befindet. Das bedeutet, dass nur Umfeldsensordaten von Umfeldsensoren in der Nähe der Basiseinheit gesammelt werden müssen. Dies reduziert die benötigte Netzwerk-Bandbreite drastisch.

Es macht auch den oder die zentralen Server überflüssig, so dass kein Serverraum mehr benötigt wird.

Basiseinheiten werden mit benachbarten Basiseinheiten in Form einer Daisy Chain verbunden. Dies ermöglicht es, Umfeldsensordaten von Umfeldsensoren zu sammeln, die an der benachbarten Basiseinheit angeschlossen sind - falls erforderlich. Durch die Verwendung einer Daisy Chain anstelle einer Baumtopologie wird der Verkabelungsaufwand reduziert.

Auch die Komplexität des Systems wird reduziert, da nur zwei Arten von Hardware im Parkplatz installiert werden müssen: Umfeldsensoren und Basiseinheiten.

Zum Beispiel sind Umfeldsensoren (, beispielsweise Kameras) vorgesehen, die einen Teil des Fahrweges abdecken und mit einer Basiseinheit verbunden sind, die in diesem Teil des Fahrweges angeordnet ist.

Zum Beispiel werden Basiseinheiten, welche allgemein auch als Recheneinheiten bezeichnet werden können, entlang des Fahrweges angeordnet, den das AVP-Kraftfahrzeug typischerweise fährt. Die Basiseinheiten sind mit ihren Nachbarn entlang dieses Fahrweges verbunden. An Kreuzungen oder Einmündungen, an denen das AVP-Kraftfahrzeug zwei oder mehr verschiedene Richtungen einschlagen kann, teilt sich auch die Daisy Chain in zwei oder mehr Zweige auf.

Zum Beispiel ist vorgesehen, dass Algorithmen, insbesondere alle Algorithmen, die in der Infrastruktur zur Steuerung des AVP-Kraftfahrzeugs benötigt werden, auf einer Basiseinheit ausgeführt werden, die sich in der Nähe des AVP-Kraftfahrzeugs befindet, d. h. in dem Segment des Fahrwegs, in dem sich das AVP-Kraftfahrzeug gerade befindet. Dadurch wird die Netzwerkbandbreite drastisch reduziert.

Zum Beispiel ist vorgesehen, dass jede Basiseinheit einen drahtlosen Kommunikationsendpunkt, die drahtlose Kommunikationsschnittstelle, umfasst, um direkt mit dem AVP-Kraftfahrzeug kommunizieren zu können. Daher kann die Kommunikation in vorteilhafter Weise nur über kurze Distanzen erfolgen.

Eine Basiseinheit umfasst zum Beispiel: Einen ersten Netzwerkswitch, der die Verbindung zu zwei oder mehr benachbarten Basiseinheiten ermöglicht, einen zweiten Netzwerkswitch, der es ermöglicht, alle Umfeldsensoren, zum Beispiel 8 Umfeldsensoren, wie in Fig. 1 gezeigt, rund um die Basiseinheit mit dieser zu verbinden, ein Rechengerät zur Ausführung von Algorithmen, wobei das Rechengerät zum Beispiel eine Standard-x86-CPU aufweist, wobei das Rechengerät zum Beispiel einen oder mehrere Prozessoren aufweist, und eine drahtlose Kommunikationsschnittstelle, welche zum Beispiel ein WLAN-Access-Point ist, um eine drahtlose Verbindung mit dem AVP-Kraftfahrzeug zu ermöglichen.

Wenn sich das AVP-Kraftfahrzeug in der Nähe einer Basiseinheit befindet, empfängt die Basiseinheit die Umfeldsensordaten von allen Umfeldensoren, die mit ihr selbst verbunden sind, und - falls erforderlich - auch von den Umfeldsensoren, die mit einer benachbarten Basiseinheit verbunden sind. Hier wird diese benachbarte Basiseinheit die entsprechenden Umfeldsensordaten an die Basiseinheit senden. Es ist jedoch nie erforderlich, Umfeldsensordaten von einem weit entfernten Umfeldsensor zu empfangen, da dieser für das AVP-Kraftfahrzeug nicht relevant sein kann. Daher wird keine hohe Netzwerkbandbreite benötigt.

Anschließend lokalisiert die Basiseinheit das AVP-Kraftfahrzeug anhand der Umfeldsensordaten. Die Basiseinheit detektiert basierend auf den Umfeldsensordaten zum Beispiel freie Flächen, berechnet eine Fahrberechtigung für das Kraftfahrzeug und sendet diese Infrastrukturassistenzdaten (Informationen über freie Flächen, Fahrberechtigung) über die drahtlose Kommunikationsschnittstelle, zum Beispiel den integrierten WLAN-Access-Point, an das AVP-Kraftfahrzeug.

Wenn sich das AVP-Kraftfahrzeug in den Bereich der nächsten Basiseinheit bewegt, werden diese Aufgaben an die nächste Basiseinheit übergeben. Somit werden die Algorithmen immer auf einer Basiseinheit in der Nähe des AVP-Kraftfahrzeugs ausgeführt. Dies reduziert den Netzwerkverkehr und ermöglicht es, mehrere AVP-Kraftfahrzeugs parallel zu assistieren. Zwei AVP-Kraftfahrzeuge werden immer so weit voneinander entfernt sein, dass die Berechnungen zum Fahren der AVP-Kraftfahrzeuge auf verschiedenen Basiseinheiten durchgeführt werden können.

Da innerhalb des Parkplatzes mehrere Basiseinheiten installiert sind, gibt es genügend Basiseinheiten, um auch redundante Berechnungen zu ermöglichen, die notwendig sind, um die erforderliche Sicherheitsintegrität zu erreichen.

Die Basiseinheiten, die miteinander verbunden sind, bilden eine Daisy Chain. Die Daisy Chain ist zum Beispiel so geschaltet, dass sie den Fahrwegen folgt, die ein AVP-Kraftfahrzeug im Parkplatz nehmen kann. Das bedeutet, dass an Kreuzungen die Daisy Chain auch in mehr als zwei Richtungen verläuft, damit das AVP-Kraftfahrzeug an der Kreuzung in alle Richtungen fahren kann und weiterhin unterstützt werden kann.

Die Daisy Chain ist zum Beispiel auch mit dem Internet verbunden. Dadurch kann sich jede Basiseinheit mit einem Backend verbinden, was eine Fernüberwachung und -wartung des Systems ermöglicht.

Um den Stromverbrauch zu reduzieren, können die Basiseinheiten in einen Ruhezustand versetzt und bei Bedarf wieder aufgeweckt werden. Wenn eine Basiseinheit schläft, versetzt sie zum Beispiel auch die angeschlossenen Umfeldsensoren in den Ruhezustand. Sie stellt jedoch sicher, dass die Daisy Chain während des Schlafens nicht unterbrochen wird.

## Patentansprüche

1. System (101, 201) zum infrastrukturgestützten Assistieren eines innerhalb eines Parkplatzes (103, 203) zumindest teilautomatisiert geführten Kraftfahrzeugs, umfassend:
eine erste Basiseinheit (109) und eine zweite Basiseinheit (111), welche beabstandet zueinander innerhalb des Parkplatzes (103, 203) angeordnet und in Reihe miteinander verbunden sind,
**dadurch gekennzeichnet, dass**
die erste Basiseinheit (109) und die zweite Basiseinheit (111) jeweils mit zumindest einem innerhalb des Parkplatzes (103, 203), im jeweiligen Umfeld der entsprechenden Basiseinheit angeordneten, einen Bereich des Parkplatzes erfassenden Umfeldsensor (119) verbunden sind,
wobei die erste und die zweite Basiseinheit (109, 111) jeweils eingerichtet sind, Infrastrukturassistenzdaten zum infrastrukturgestützten Assistieren des innerhalb des Parkplatzes (103, 203) zumindest teilautomatisiert geführten Kraftfahrzeugs basierend auf den jeweiligen erfassten Bereich repräsentierende Umfeldsensordaten des jeweiligen zumindest einen Umfeldsensors (119) zu ermitteln,
zumindest eine drahtlose Kommunikationsschnittstelle, welche eingerichtet ist, die ermittelten Infrastrukturassistenzdaten an das Kraftfahrzeug zu senden.

2. System (101, 201) nach Anspruch 1, wobei die erste und die zweite Basiseinheit (109, 111) jeweils eingerichtet sind, die Infrastrukturassistenzdaten basierend auf den Umfeldsensordaten des zumindest einen Umfeldsensors (119) der jeweils anderen Basiseinheit zu ermitteln.

3. System (101, 201) nach Anspruch 1 oder 2, wobei die erste und die zweite Basiseinheit (109, 111) jeweils eine erste Kommunikationseinrichtung, insbesondere einen ersten Netzwerkswitch (115), und eine zweite Kommunikationseinrichtung, insbesondere einen zweiten Netzwerkswitch (117), umfassen, wobei die Verbindung zwischen der ersten und der zweiten Basiseinheit (109, 111) unter Verwendung der beiden ersten Kommunikationseinrichtungen gebildet ist, und wobei die jeweilige Verbindung zwischen dem zumindest einen Umfeldsensor (119) und der entsprechenden Basiseinheit unter Verwendung der entsprechenden zweiten Kommunikationseinrichtung gebildet ist.

4. System (101, 201) nach einem der vorherigen Ansprüche, wobei die erste und die zweite Basiseinheit (109, 111) entlang eines Fahrweges des Parkplatzes (103, 203) angeordnet sind.

5. System (101, 201) nach einem der vorherigen Ansprüche, wobei die erste und die zweite Basiseinheit (109, 111) eingerichtet sind, basierend auf den Umfeldsensordaten das Kraftfahrzeug zu verfolgen und basierend auf der Verfolgung das jeweilige Senden von Infrastrukturdaten mittels der entsprechenden drahtlosen Kommunikationsschnittstelle zu steuern.

6. System (101, 201) nach einem der vorherigen Ansprüche, umfassend eine dritte Basiseinheit (113), welche innerhalb des Parkplatzes (103, 203) angeordnet und in Reihe mit der ersten oder der zweiten Basiseinheit (109, 111) verbunden ist, wobei die dritte Basiseinheit (113) mit zumindest einem innerhalb des Parkplatzes (103, 203), im Umfeld der dritten Basiseinheit (113) angeordneten, einen Bereich des Parkplatzes (103, 203) erfassenden Umfeldsensor (119) verbunden ist, wobei die dritte Basiseinheit (113) eingerichtet ist, Infrastrukturassistenzdaten zum infrastrukturgestützten Assistieren des innerhalb des Parkplatzes (103, 203) zumindest teilautomatisiert geführten Kraftfahrzeugs basierend auf den jeweiligen erfassten Bereich repräsentierende Umfeldsensordaten des zumindest einen Umfeldsensors (119) zu ermitteln.

7. System (101, 201) nach einem der vorherigen Ansprüche, wobei die zumindest eine drahtlose Kommunikationsschnittstelle von jeweils zumindest einer Basiseinheit (109, 111, 113) umfasst ist.

8. Verfahren zum infrastrukturgestützten Assistieren eines innerhalb eines Parkplatzes (103, 203) zumindest teilautomatisiert geführten Kraftfahrzeugs unter Verwendung des Systems (101, 201) nach einem der vorherigen Ansprüche, **dadurch gekennzeichnet, dass** es die die folgenden Schritte umfasst:
Ermitteln (301) mittels zumindest einer der ersten und der zweiten Basiseinheit (109, 111) von Infrastrukturassistenzdaten zum infrastrukturgestützten Assistieren des innerhalb des Parkplatzes (103, 203) zumindest teilautomatisiert geführten Kraftfahrzeugs basierend auf den entsprechenden Umfeldsensordaten, Senden (303) der ermittelten Infrastrukturassistenzdaten mittels der zumindest einen drahtlosen Kommunikationsschnittstelle an das Kraftfahrzeug.

9. Computerprogramm (403), umfassend Befehle, die bei Ausführung des Computerprogramms durch einen Computer diesen veranlassen, ein Verfahren gemäß Anspruch 8 auszuführen.

10. Maschinenlesbares Speichermedium (401), auf dem das Computerprogramm (403) nach Anspruch 9 gespeichert ist.

## Claims

1. System (101, 201) for infrastructure-based assistance of a motor vehicle guided in an at least partially automated manner within a parking area (103, 203), comprising:
a first base unit (109) and a second base unit (111) which are arranged at a distance from one another within the parking area (103, 203) and are connected in series with one another,
**characterized in that** the first base unit (109) and the second base unit (111) are each connected to at least one environment sensor (119) which is arranged within the parking area (103, 203) in the respective environment of the corresponding base unit and captures a region of the parking area,
wherein the first and the second base unit (109, 111) are each configured to determine infrastructure assistance data for infrastructure-based assistance of the motor vehicle guided in an at least partially automated manner within the parking area (103, 203) on the basis of environment sensor data from the respective at least one environment sensor (119) that represent the respective captured region,
at least one wireless communication interface which is configured to send the determined infrastructure assistance data to the motor vehicle.

2. System (101, 201) according to Claim 1, wherein the first and the second base unit (109, 111) are each configured to determine the infrastructure assistance data on the basis of the environment sensor data from the at least one environment sensor (119) of the respective other base unit.

3. System (101, 201) according to Claim 1 or 2, wherein the first and the second base unit (109, 111) each comprise a first communication device, in particular a first network switch (115), and a second communication device, in particular a second network switch (117), wherein the connection between the first and the second base unit (109, 111) is formed using the two first communication devices, and wherein the respective connection between the at least one environment sensor (119) and the corresponding base unit is formed using the corresponding second communication device.

4. System (101, 201) according to one of the preceding claims, wherein the first and the second base unit (109, 111) are arranged along a route of the parking area (103, 203).

5. System (101, 201) according to one of the preceding claims, wherein the first and the second base unit (109, 111) are configured to track the motor vehicle on the basis of the environment sensor data and to control the respective sending of infrastructure data by means of the corresponding wireless communication interface on the basis of the tracking.

6. System (101, 201) according to one of the preceding claims, comprising a third base unit (113) which is arranged within the parking area (103, 203) and is connected in series with the first or the second base unit (109, 111), wherein the third base unit (113) is connected to at least one environment sensor (119) which is arranged within the parking area (103, 203) in the environment of the third base unit (113) and captures a region of the parking area (103, 203), wherein the third base unit (113) is configured to determine infrastructure assistance data for infrastructure-based assistance of the motor vehicle guided in an at least partially automated manner within the parking area (103, 203) on the basis of environment sensor data from the at least one environment sensor (119) that represent the respective captured region.

7. System (101, 201) according to one of the preceding claims, wherein the at least one wireless communication interface is included in each case in at least one base unit (109, 111, 113).

8. Method for infrastructure-based assistance of a motor vehicle guided in an at least partially automated manner within a parking area (103, 203) using the system (101, 201) according to one of the preceding claims,
**characterized in that** it comprises the following steps:
determining (301), by means of at least one of the first and the second base unit (109, 111), infrastructure assistance data for infrastructure-based assistance of the motor vehicle guided in an at least partially automated manner within the parking area (103, 203) on the basis of the corresponding environment sensor data, and sending (303) the determined infrastructure assistance data to the motor vehicle by means of the at least one wireless communication interface.

9. Computer program (403) comprising instructions which, when the computer program is executed by a computer, cause the latter to perform a method according to Claim 8.

10. Machine-readable storage medium (401) on which the computer program (403) according to Claim 9 is stored.

## Revendications

1. Système (101, 201) d'assistance prise en charge par une infrastructure d'un véhicule à moteur au moins de manière partiellement automatisée à l'intérieur d'un parc de stationnement (103, 203), comprenant :
une première unité de base (109) et une deuxième unité de base (111), qui sont disposées à distance l'une par rapport à l'autre à l'intérieur du parc de stationnement (103, 203) et sont reliées l'une à l'autre en série,
**caractérisé en ce que** la première unité de base (109) et la deuxième unité de base (111) sont respectivement reliées à au moins un capteur d'environnement (119), disposé à l'intérieur du parc de stationnement (103, 203), dans l'environnement respectif de l'unité de base correspondante, couvrant une zone du parc de stationnement,
la première et la deuxième unité de base (109, 111) étant respectivement mises au point pour déterminer des données d'assistance par infrastructure pour l'assistance prise en charge par infrastructure du véhicule à moteur guidé à l'intérieur du parc de stationnement (103, 203) au moins de manière partiellement automatisée sur la base de données de capteur d'environnement de l'au moins un capteur d'environnement (119) respectif représentant la zone détectée respective,
au moins une interface de communication sans fil, qui est mise au point pour envoyer les données d'assistance par infrastructure déterminées au véhicule à moteur.

2. Système (101, 201) selon la revendication 1, la première et la deuxième unité de base (109, 111) étant respectivement mises au point pour déterminer les données d'assistance par infrastructure sur la base des données de capteur d'environnement de l'au moins un capteur d'environnement (119) de l'autre unité de base.

3. Système (101, 201) selon la revendication 1 ou 2, la première et la deuxième unité de base (109, 111) comprenant chacune un premier dispositif de communication, en particulier un premier commutateur réseau (115), et un deuxième dispositif de communication, en particulier un deuxième commutateur réseau (117), la connexion entre la première et la deuxième unité de base (109, 111) étant formée en utilisant les deux premiers dispositifs de communication, et la connexion entre l'au moins un capteur d'environnement (119) et l'unité de base correspondante étant établie en utilisant le deuxième dispositif de communication correspondant.

4. Système (101, 201) selon l'une des revendications précédentes, la première et la deuxième unité de base (109, 111) étant disposées le long d'une voie du parc de stationnement (103, 203).

5. Système (101, 201) selon l'une des revendications précédentes, la première et la deuxième unité de base (109, 111) étant mises au point pour suivre le véhicule à moteur sur la base des données de capteur d'environnement et pour commander, sur la base du suivi, l'envoi respectif de données d'infrastructure au moyen de l'interface de communication sans fil correspondante.

6. Système (101, 201) selon l'une des revendications précédentes, comprenant une troisième unité de base (113), qui est disposée à l'intérieur du parc de stationnement (103, 203) et est reliée en série à la première ou à la deuxième unité de base (109, 111), la troisième unité de base (113) étant reliée à au moins un capteur d'environnement (119) disposé à l'intérieur du parc de stationnement (103, 203), dans l'environnement de la troisième unité de base (113), couvrant une zone du parc de stationnement (103, 203), la troisième unité de base (113) étant mise au point pour déterminer des données d'assistance par infrastructure pour l'assistance prise en charge par infrastructure du véhicule à moteur guidé à l'intérieur du parc de stationnement (103, 203) au moins de manière partiellement automatisée sur la base de données de capteur d'environnement de l'au moins un capteur d'environnement (119) représentant la zone détectée respective.

7. Système (101, 201) selon l'une des revendications précédentes, l'au moins une interface de communication sans fil étant comprise par respectivement au moins une unité de base (109, 111, 113).

8. Procédé d'assistance prise en charge par infrastructure d'un véhicule à moteur guidé à l'intérieur d'un parc de stationnement (103, 203) au moins de manière partiellement automatisée en utilisant le système (101, 201) selon l'une des revendications précédentes,
**caractérisé en ce que** le procédé comprend les étapes suivantes :
détermination (301) au moyen d'au moins une de la première et deuxième unité de base (109, 111) de données d'assistance par infrastructure pour l'assistance prise en charge par infrastructure du véhicule à moteur guidé à l'intérieur du parc de stationnement (103, 203) au moins de manière partiellement automatisée sur la base des données de capteur d'environnement correspondantes, envoi (303) des données d'assistance par infrastructure déterminées au moyen de l'au moins une interface de communication sans fil au véhicule à moteur.

9. Programme informatique (403), comprenant des instructions qui, lorsque le programme informatique est exécuté par un ordinateur, amènent celui-ci à exécuter un procédé selon la revendication 8.

10. Support de stockage (401) lisible par machine, sur lequel est stocké le programme informatique (403) selon la revendication 9.
